# EUROPEAN PATENT SPECIFICATION

(11) **EP 1 680 656 B1**
(45) Date of publication and mention of the grant of the patent: **01.02.2012**
(21) Application number: 04791921.2
(22) Date of filing: 27.10.2004
(51) Int. Cl.: G01M 3/04

(54) **METHOD AND APPARATUS FOR WATERPROOFING TESTS**
VERFAHREN UND VORRICHTUNG FÜR WASSERDICHTEPRÜFUNGEN
PROCEDE ET APPAREIL D'ESSAIS D'IMPERMEABILITE A L'EAU

(30) Priority: 07.11.2003 IT MI20032145
(43) Date of publication of application: 19.07.2006
(73) Proprietor: OutDry Technologies Corporation, Portland, OR 97229-5418 (US)
(72) Inventor: MORLACCHI, Luca, I-20025 Legnano (IT)
(74) Representative: Leinweber & Zimmermann
(86) International application number: PCT/IT2004/000587
(87) International publication number: WO 2005/045390

(56) References cited:
- US-A- 4 961 339
- US-A- 5 329 807
- US-A- 5 463 894

## Description

The present invention relates to a method for carrying out waterproofing tests, in particular of footwear and clothes. The present invention also relates to an apparatus which can be employed for carrying out said method.

US patent 5329807 discloses a method for waterproofing tests, in which the samples to be tested, for instance footwear, are filled with a liquid and arranged into a centrifugal apparatus, so as to increase the pressure of the liquid exerted onto the inner walls of the samples and to test in a simple and quick manner their waterproofing. However, the tests carried out with this method and this apparatus may give inaccurate results, since they do not simulate the real conditions in which water can penetrate from the outside to the inside of the samples, and not vice versa. Furthermore, after a test, the samples are wet inside, so that it is difficult to dry them and they can also be damaged. US 5463894 discloses a process and a device for surveying the properties of a permeable material, in which a sample previously imbibed with a fluid is placed into a vessel or bucket and centrifugal force is applied by rotating the bucket at the end of an arm.

It is therefore an object of the present invention to provide a method and an apparatus which are free from said disadvantages. Said object is achieved with a method and an apparatus, the main features of which are disclosed in claims 1 and 48, respectively, while other features are disclosed in the remaining claims.

Thanks to the tanks which is provided with, the centrifugal apparatus according to the present invention allows to perfectly simulate the real conditions; since the samples are immersed into a liquid which may penetrate therein from the outside to the inside, and not vice versa. Furthermore, after a test, the samples are not or are just slightly wet inside, so that it is not necessary nor difficult to dry them internally, while the outer drying is always easier or even unnecessary. The method and the apparatus according to the present invention, instead of the known ones, also allow to test seepages of water into the interspace between the upper of a footwear and a membrane arranged therein, simply by weighing this footwear before and after the test.

According to a particular aspect of the invention, the bottom of the tanks of the centrifugal apparatus can be provided with fixing means for avoiding that the samples float in the liquid, thereby altering the test results.

Further advantages and features of the method and the apparatus according to the present invention will become clear to those skilled in the art from the following detailed and non-limiting description of an embodiment thereof, with reference to the attached drawings, wherein:
- figure 1 shows a front view of the apparatus according to said embodiment of the invention;
- figure 2 shows an enlarged and partially cross-sectioned perspective view of a container of the apparatus of figure 1;
- figure 3 shows a front view of the apparatus of figure 1 in operation; and
- figure 4 shows an enlarged and partially cross-sectioned perspective view of the container of figure 2 in operation.

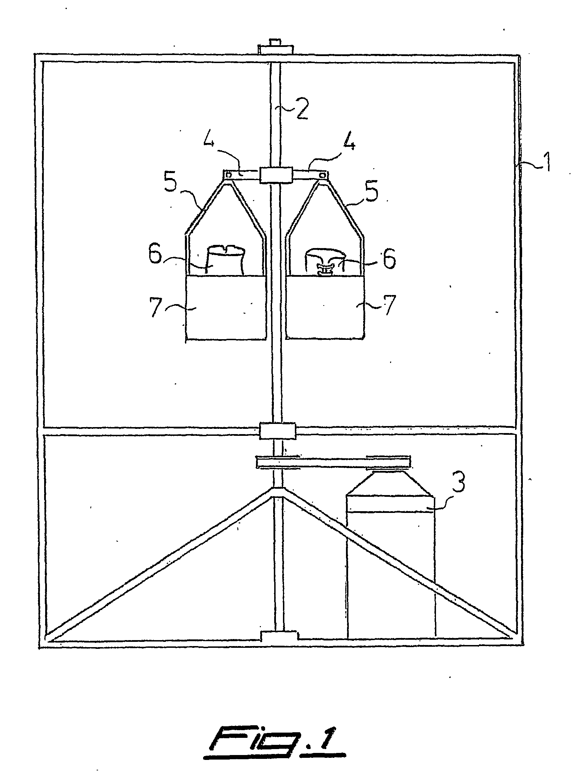

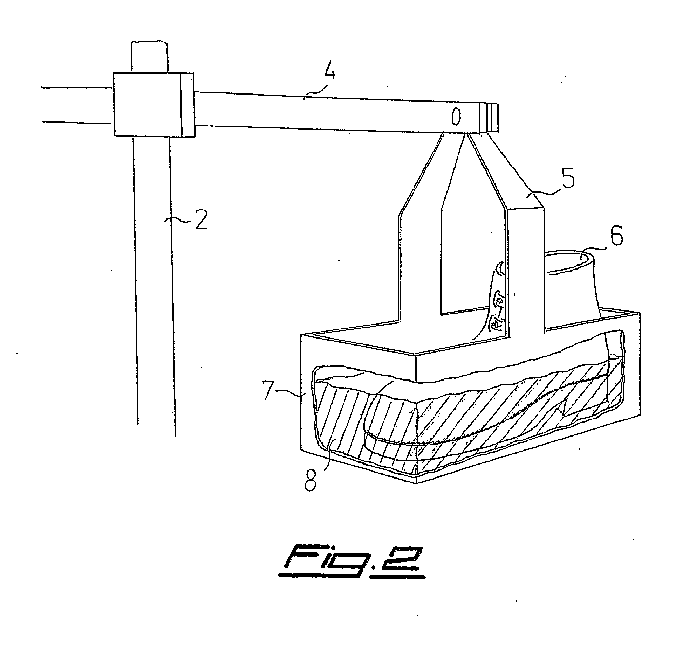

Referring to figures 1 and 2, it is seen that the apparatus according to the present invention comprises in a known way a supporting structure 1 in which a shaft 2 can rotate thanks to a motor 3. One or more members 4, in particular arms, protrude from shaft 2 for supporting one or more containers 5, which are pivoted to arms 4, so as to swing around a substantially horizontal axis perpendicular to the same arms. Containers 5 can contain one or more samples 6 to be tested, for example of footwear.

According to the invention, containers 5 are provided with one or more tanks 7, in particular having a substantially parallelepiped shape, in which a liquid 8, for example water, can be poured, so that samples 6 are immersed at least partially in this liquid. The bottom of tanks 7 is preferably provided with fixing means (not visible in the figures) for avoiding that samples 6 float in liquid 8.

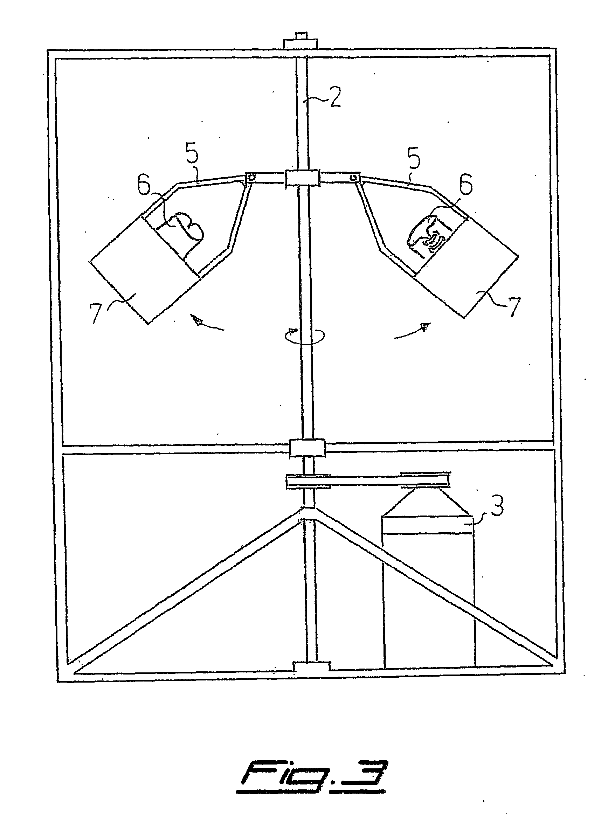

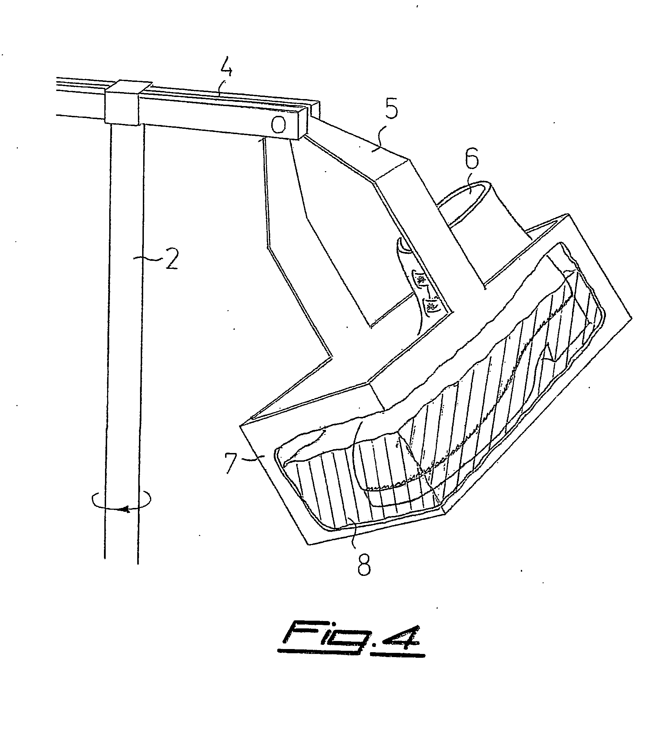

Referring now to figures 3 and 4, it is seen that, during the operation, it is sufficient to start motor 3, so as to rotate containers 5 around shaft 2, for testing the waterproofing of samples 6. Due to the centrifugal force, containers 5 and tanks 7 swing outwards, so that liquid 8 simultaneously increases, without overflowing; its pressure onto the outer surface of samples 6. For example, in a test with a rotation radius of containers 5 of about 50 cm and a speed of 150 rounds per minute, the factor of the relative centrifugal force (RCF) is at least 10, in particular about 13, i.e. the pressure of liquid 8 exerted onto samples 6 is increased about 13 times with respect to the pressure with containers 5 still.

For measuring the waterproofing, it is sufficient to arrange an hygrometer or humidity sensors into samples 6 during and/or after the test. If samples 6 are not rigid, such as for example gloves or other clothes, a stiffening structure with a shape complimentary to the shape of the same samples can be arranged therein.

Possible variations and/or additions may be made by those skilled in the art to the hereinabove described and illustrated embodiment while remaining within the scope of the same invention.

## Claims

1. Method for waterproofing tests of samples (6) of footwear and clothes, **characterized by** comprising the following operative steps:
- a pre-test step in which one or more samples (6) of footwear or clothes to be tested are arranged into a tank (7) of one or more containers (5) pivoted to a centrifugal apparatus (1, 2, 3, 4) and
a liquid (8) is poured in said tank (7), so that the samples (6) are immersed at least partially in this liquid (8);
- a test step in which the centrifugal apparatus (1, 2, 3, 4) is started, so that the tanks (7) swing outwards and the pressure of the liquid contained therein increases onto the outer surface of the samples (6).

2. Method according to the previous claim, **characterized in that** the factor of the relative centrifugal force (RCF) of the centrifugal apparatus (1, 2, 3, 4) is at least 10 during the operation.

3. Method according to one of the previous claims, **characterized in that** the samples (6) are fixed to the bottom of the tank (7) during the operation of the centrifugal apparatus (1, 2, 3, 4).

4. Method according to one of the previous claims, **characterized in that** an hygrometer or humidity sensors are arranged into the samples (6).

5. Method according to one of the previous claims, **characterized in that** a stiffening structure with a shape complementary to the shape of the samples (6) is arranged in the samples (6).

6. Method according to one of the previous claims, **characterized in that** the samples (6) are weighted before and after the test.

7. Method according to one of the previous claims, **characterized in that** the samples (6) do not contain the liquid (8) before the test.

8. Apparatus for waterproofing tests of samples (6) of footwear and clothes, which comprises a supporting structure (1) in which a shaft (2) provided with one or more protruding members (4) can rotate for supporting in an swinging manner one or more containers (5) suitable for containing one or more samples (6) of footwear or clothes, wherein the containers (5) are provided with one or more tanks (7) in which a liquid (8) can be poured for immersing the samples (6) at least partially in this liquid (8), **characterized in that** the bottom of the tanks (7) is provided with fixing means, so that the samples (6) arranged therein do not float in the liquid (8).

9. Apparatus according to claim 8, **characterized in that** the factor of relative centrifugal force (RCF) exerted onto the samples (6) during the rotation of the shaft (2) is at least 10.

## Patentansprüche

1. Verfahren für Wasserdichtigkeitsprüfungen von Probeteilen (6) von Fußbekleidung und Kleidung, **gekennzeichnet durch** Umfassen der folgenden Arbeitsschritte:
- einen Schritt vor Prüfung, in dem ein oder mehrere Probeteile (6) von zu prüfender Fußbekleidung oder Kleidung in einem Tank (7) eines oder mehrerer Behälter (5) angeordnet werden, die an einer Zentrifugenvorrichtung (1, 2, 3, 4) schwenkbar angebracht sind; und eine Flüssigkeit (8) in den Tank (7) gegossen wird, so dass die Probeteile (6) zumindest teilweise in diese Flüssigkeit (8) eingetaucht sind;
- einen Prüfungsschritt, in dem die Zentrifugenvorrichtung (1, 2, 3, 4) gestartet wird, so dass die Tanks (7) auswärts schwingen und der Druck der darin enthaltenen Flüssigkeit auf die Außenfläche der Probeteile (6) zunimmt.

2. Verfahren nach dem vorstehenden Anspruch, **dadurch gekennzeichnet, dass** der Faktor der relativen Zentrifugalkraft (RZK) der Zentrifugenvorrichtung (1, 2, 3, 4) während des Betriebs mindestens 10 beträgt.

3. Verfahren nach einem der vorstehenden Ansprüche, **dadurch gekennzeichnet, dass** die Probeteile (6) am Boden des Tanks (7) während des Betriebs der Zentrifugenvorrichtung (1, 2, 3, 4) befestigt sind.

4. Verfahren nach einem der vorstehenden Ansprüche, **dadurch gekennzeichnet, dass** ein Hygrometer oder Feuchtigkeitssensoren in den Probeteilen (6) angeordnet sind.

5. Verfahren nach einem der vorstehenden Ansprüche, **dadurch gekennzeichnet, dass** eine Versteifungsstruktur mit einer zur Form der Probeteile (6) komplementären Form in den Probeteilen (6) angeordnet ist.

6. Verfahren nach einem der vorstehenden Ansprüche, **dadurch gekennzeichnet, dass** die Probeteile (6) vor und nach der Prüfung gewogen werden.

7. Verfahren nach einem der vorstehenden Ansprüche, **dadurch gekennzeichnet, dass** die Probeteile (6) die Flüssigkeit (8) nicht vor der Prüfung enthalten.

8. Vorrichtung für Wasserdichtigkeitsprüfungen von Probeteilen (6) von Fußbekleidung und Kleidung, die eine Tragstruktur (1) umfasst, in der eine mit einem oder mehreren vorragenden Teilen (4) versehene Welle (2) rotieren kann, um in schwingender Weise einen oder mehrere Behälter (5) zu tragen, die ein oder mehrere Probeteile (6) von Fußbekleidung oder Kleidung enthalten können, wobei die Behälter (5) mit einem oder mehreren Tanks (7) versehen sind, in die eine Flüssigkeit (8) gegossen werden kann, um die Probeteile (6) zumindest teilweise in diese Flüssigkeit (8) einzutauchen, **dadurch gekennzeichnet, dass** der Boden der Tanks (7) mit Befestigungsmitteln versehen ist, so dass die darin angeordneten Probeteile (6) nicht in der Flüssigkeit (8) treiben.

9. Vorrichtung nach Anspruch 8, **dadurch gekennzeichnet, dass** der Faktor relativer Zentrifugalkraft (RZK), die auf die Probeteile (6) während der Rotation der Welle (2) ausgeübt wird, mindestens 10 beträgt.

## Revendications

1. Procédé d'essai d'imperméabilité à l'eau d'échantillons (6) de chaussures et de vêtements, **caractérisé en ce qu'**il comprend les étapes opérationnelles suivantes :
- une étape préalable à l'essai, dans laquelle un ou plusieurs échantillons (6) de chaussures ou de vêtements à tester sont disposés dans le bac (7) d'un ou plusieurs récipients (5) situés sur un pivot d'un appareil centrifuge (1, 2, 3, 4), et un liquide (8) est versé dans ledit bac (7) de manière que les échantillons (6) sont immergés au moins partiellement dans ce liquide (8) ;
- une étape d'essai dans laquelle l'appareil centrifuge (1, 2, 3, 4) est mis à fonctionner de manière que les bacs (7) sont entraînés dans un balancement dirigé vers l'extérieur et que la pression du liquide contenu dans ceux-ci augmente sur la surface extérieure des échantillons (6).

2. Procédé selon la revendication précédente, **caractérisé en ce que** le facteur de la force centrifuge relative (FCR) de l'appareil centrifuge (1, 2, 3, 4) est d'au moins 10 en cours de fonctionnement.

3. Procédé selon l'une des revendications précédentes, **caractérisé en ce que** les échantillons (6) sont fixés au fond du bac (7) durant le fonctionnement de l'appareil centrifuge (1, 2, 3, 4).

4. Procédé selon l'une des revendications précédentes, **caractérisé en ce qu'**un hygromètre ou bien des capteurs d'humidité sont disposés dans les échantillons (6).

5. Procédé selon l'une des revendications précédentes, **caractérisé en ce qu'**une structure de rigidification, d'une forme complémentaire à la forme des échantillons (6), est agencée dans les échantillons (6).

6. Procédé selon l'une des revendications précédentes, **caractérisé en ce que** les échantillons (6) sont pesés avant et après l'essai.

7. Procédé selon l'une des revendications précédentes, **caractérisé en ce que** les échantillons (6) ne contiennent pas dudit liquide (8) avant l'essai.

8. Appareil d'essai d'imperméabilité à l'eau d'échantillons (6) de chaussures et de vêtements, comprenant une structure de support (1) dans laquelle un axe (2) pourvu d'un ou plusieurs éléments faisant saillie (4) peut effectuer une rotation en supportant, dans un balancement, un ou plusieurs récipients (5) adaptés pour contenir un ou plusieurs échantillons (6) de chaussures ou de vêtements, les récipients (5) étant pourvus d'un ou de plusieurs bacs (7) dans lesquels peut être versé un liquide (8) en vue de l'immersion au moins partielle des échantillons (6) dans ce liquide (8), **caractérisé en ce que** le fond des bacs (7) est muni de moyens de fixation empêchant les échantillons (6) qui y sont agencés de flotter dans le liquide (8).

9. Appareil selon la revendication 4, **caractérisé en ce que** le facteur de force centrifuge relative (RCF) exercé sur les échantillons (6) au cours de la rotation de l'axe (2) est d'au moins 10.
